Europäisches Patentamt

European Patent Office

Office européen des brevets

(19)

(11) Veröffentlichungsnummer: **0 256 153**

**A1**

(12) # EUROPÄISCHE PATENTANMELDUNG

(21) Anmeldenummer: **86111234.0**

(22) Anmeldetag: **14.08.86**

(51) Int. Cl.⁴: **C03C 17/32** , G02B 1/10

(43) Veröffentlichungstag der Anmeldung:
**24.02.88 Patentblatt 88/08**

(84) Benannte Vertragsstaaten:
**AT BE CH DE FR GB LI NL**

(71) Anmelder: **Müller, Hilmar**
**Rossacherstrasse 4**
**D-8631 Grossheirath(DE)**

(72) Erfinder: **Müller, Hilmar**
**Rossacherstrasse 4**
**D-8631 Grossheirath(DE)**

(74) Vertreter: **Masch, Karl Gerhard et al**
**Patentanwälte Andrejewski, Honke & Partner**
**Theaterplatz 3 Postfach 10 02 54**
**D-4300 Essen 1(DE)**

(54) **Verfahren zum Herstellen von Antireflexscheiben für Bilder und dergleichen.**

(57) Zum Herstellen von Antireflexscheiben für Bilder und dergleichen wird eine Glasscheibe auf einer ihrer beiden Seiten bearbeitet. Solche Antireflexscheiben können besonders kostengünstig hergestellt werden, wenn in staubfreier Atmosphäre auf die Glasscheibe im Siebdruck eine Dünnschicht aus farblosem Kunststoff, insbes. Epoxidharz aufgebracht wird.

EP 0 256 153 A1

## Verfahren zum Herstellen von Antireflexscheiben für Bilder und dergleichen

Die Erfindung betrifft ein Verfarhen zum Herstellen von Antireflexscheiben für Bilder und dergleichen, wobei eine Glasscheibe auf einer ihrer beiden Seiten bearbeitet wird.

Im Rahmen der bekannten gattungsgemäßen Maßnahmen wird die Glasscheibe entweder einseitig gesandstrahlt oder beidseitig in Flußsäure geätzt. Beide Verfahren sind verhältnismäßig aufwendig, so daß die Antireflexscheiben im Vergleich zu normalen Glasscheiben beachtlich teurer sind.

Der Erfindung liegt die Aufgabe zugrunde, Antireflexscheiben einfacher und kostengünstiger herzustellen.

Die erfindungsgemäße Lösung dieser Aufgabe besteht darin, daß in staubfreier Atmosphäre auf die Glasschicht im Siebdruck eine Dünnschicht aus farblosem Kunststoff aufgebracht wird.

Die Erfindung nutzt hier die bisher unbekannte Tatsache, daß eine im Siebdruckverfahren auf eine Glasscheibe aufgebrachte dünne Schicht aus farblosem Kunststoff überraschenderweise denselben Entspiegelungseffekt wie in bekannter Weise hergestellte Antireflexscheiben zeigt. Das Auftragen in staubfreier Atmosphäre per Siebdruck ist aber wesentlich einfacher, so daß nunmehr eine kostengünstige Massenproduktion von Antireflexscheiben für Bilder und dergleichen möglich ist.

Für die weitere Ausgestaltung bestehen im Rahmen der Erfindung mehrere Möglichkeiten. So kann grundsätzlich mit jedem in den flüssigen Zustand versetzten, beispielsweise in einem organischen Lösungsmittel gelösten farblosen Kunststoff gearbeitet werden. Be vorzugt ist allerdings ein Epoxidharz. Dieses wird zweckmäßigerweise in Form eines in organischem Lösungsmittel gelösten Epoxidharz-Härter-Gemisches auf die Glasscheibe aufgetragen. Epoxidharz-Härter-Gemische härten bekanntermaßen praktisch ohne Schwinden aus und sind dann gegen mechanische Beschädigungen, wie Zerkratzungen, sehr unempfindlich. Besonders guten Antireflexeffekt erreicht man, wenn die Dünnschicht mit einer Stärke von 1 bis 20 Mikron aufgebracht wird; optimal sind Stärken von 5 bis 8 Mikron. Da die Glasscheiben in üblichen Siebdruckmaschinen an ihren Rändern manipuliert werden, läßt sich nicht vermeiden, daß ein Randbereich der Glasscheibe unbeschichtet bleibt. Insbes. in der Ausführungsform für rahmenlose Bilder wird daher die Glasscheibe vor Aufbringung der Dünnschicht auf Maß geschnitten und an ihren Rändern geschliffen.

Beispiel:

Zum Herstellen einer Antireflexscheibe für Bilder wurde eine Glasscheibe in staubfreier Atmosphäre im Siebdruckverfahren mit einer etwa 5 bis 8 Mikron starken Dünnschicht aus einem gelösten farblosen Epoxidharz-Härter-Gemisch beschichtet. Die Topfzeit war so eingestellt, daß die Gelierung erst nach dem Auftragen auftrat. Die Dünnschicht härtete ohne Schwund auf und zeigt eine besonders hohe Kratzfestigkeit. Die Glasscheibe wurde auf Maß geschnitten und an ihren Rändern geschliffen.

### Ansprüche

1. Verfahren zum Herstellen von Antireflexscheiben für Bilder und dergleichen, wobei eine Glasscheibe auf einer ihrer beiden Seiten bearbeitet wird, **dadurch gekennzeichnet**, daß in staubfreier Atmosphäre im Siebdruck eine Dünnschicht aus farblosem Kunstsoff aufgebracht wird.

2. Verfahren nach Anspruch 1, dadurch gekennzeichnet, daß eine Epoxidharzschicht aufgebracht wird.

3. Verfahren nach Anspruch 2, dadurch gekennzeichnet, daß die Epoxidharzschicht in Form eines in organischem Lösungsmittel gelösten Epoxidharz-Härter-Gemisches auf die Glasscheibe aufgetragen wird.

4. Verfahren nach Anspruch 1 oder 2, dadurch gekennzeichnet, daß die Dünnschicht mit einer Stärke von 1 bis 20 Mikron aufgebracht wird.

5. Verfahren nach Anspruch 3, dadurch gekennzeichnet, daß die Dünnschicht mit einer Stärke von 5 bis 8 Mikron aufgebracht wird.

6. Verfahren nach einem der Ansprüche 1 bis 4, insbes. in der Ausführungsform für rahmenlose Bilder, dadurch gekennzeichnet, daß die Glasscheibe vor dem Aufbringen der Dünnschicht auf Maß geschnitten und an ihren Rändern geschliffen wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 144 876 (GLASPLAKATEFABRIK OFFENBURG FRITZ BORSI KG) * Seite 4, Zeile 28 - Seite 5, Zeile 25 * | 1-3 | C 03 C 17/32 G 02 B 1/10 |
| | --- | | |
| X | US-A-3 419 412 (W.C. MORRIS et al.) * Spalte 1, Zeile 26 - Spalte 4, Zeile 4 * | 1-3 | |
| | ----- | | |

RECHERCHIERTE
SACHGEBIETE (Int. Cl.4)

C 03 C 17/00
G 02 B 1/00

Der vorliegende Recherchenbericht wurde für alle Patentansprüche erstellt.

| Recherchenort | Abschlußdatum der Recherche | Prüfer |
|---|---|---|
| DEN HAAG | 07-05-1987 | SARNEEL A.P.T. |

KATEGORIE DER GENANNTEN DOKUMENTE
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82